# DEMANDE DE BREVET EUROPEEN

(11) **EP 3 369 905 A1**
(43) Date de publication de la demande: **05.09.2018**
(21) Numéro de dépôt: 18158252.9
(22) Date de dépôt: 23.02.2018
(51) Int. Cl.: F01N 13/00, F01N 3/10, F01N 3/20, F01N 3/08

(54) **VÉHICULE INTÉGRANT UN SYSTÈME DE POST-TRAITEMENT DES GAZ D' ÉCHAPPEMENT D'UN MOTEUR À COMBUSTION**

(30) Priorité: 02.03.2017 FR 1751715
(71) Demandeur: PSA Automobiles SA, 78300 Poissy (FR)
(72) Inventeur: GENIES, Jean Florent, 78100 St Germain en Laye (FR); BERTIN, Thierry, 92250 La Garenne Colombes (FR)

(57) **Abrégé**

L'invention porte sur un véhicule automobile délimitant un espace sous capot avant équipé d'un moteur thermique (M) et un espace sous caisse, ledit moteur étant connecté fluidiquement à une ligne d'échappement (L) intégrant un système de post-traitement des gaz d'échappement, caractérisé en ce que ledit système comporte
• dans l'espace sous capot : un organe catalyseur d'oxydation DOC (1) ou un organe piège à NOx LNT
• dans l'espace sous caisse : d'amont en aval une embouchure (2) d'un moyen d'introduction de réducteur ou de précurseur d'un réducteur pour la réduction catalytique sélective des oxydes d'azote SCR ; un organe catalyseur de réduction catalytique sélective SCR des oxydes d'azote NOₓ (4) ; un organe filtre à particules (5) muni d'un revêtement catalyseur de réduction catalytique sélective SCRF des oxydes d'azote NOₓ ; un organe de traitement des fuites d'ammoniac (6).

## Description

L'invention est relative à des moyens de traitement des polluants des gaz d'échappement des moteurs à combustion.

L'invention concerne plus particulièrement les véhicules intégrant un système de post-traitement des gaz d'échappement d'un moteur à combustion, notamment les véhicules automobiles, mais également tout autre véhicule terrestre ou maritime par analogie. Dans la suite du présent texte, ne sera évoquée que l'application aux véhicules automobile.

Les émissions polluantes des moteurs à combustion équipant les véhicules automobiles sont réglementées par des normes. Les polluants réglementés sont, selon la technologie de moteur à combustion considérée, le monoxyde de carbone (CO), les hydrocarbures imbrûlés (HC), les oxydes d'azotes (NOx, c'est-à-dire NO et NO₂) et les particules (PM), qui sont formés lors de la combustion du carburant dans la chambre de combustion puis émis à l'échappement.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azote ; un filtre à particules peut être employé pour le traitement des particules de suie.

On désigne de manière générale ce type de dispositif par le terme de dispositif de « post-traitement » des gaz d'échappement.

Pour satisfaire aux normes anti-pollution sur les émissions d'oxydes d'azote (NOx), un système spécifique de post-traitement peut être introduit dans la ligne d'échappement des véhicules, notamment des véhicules équipés de moteurs Diesel. Pour le traitement des oxydes d'azote (NOx), on connaît des technologies de réduction catalytique sélective, ou « SCR » pour « Selective Catalytic Reduction » en anglais, qui consistent à réduire les NOx par introduction d'un agent réducteur (ou d'un précurseur d'un tel agent réducteur) dans les gaz d'échappement par réactions catalysées. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

L'agent réducteur généré permet de réduire les oxydes d'azotes par réaction dans un catalyseur SCR, c'est-à-dire un substrat portant une imprégnation catalytique apte à favoriser la réduction des NOx par l'agent réducteur.

Les normes européennes, notamment, tendent à devenir de plus en plus sévères. Et les solutions pour réduire les émissions de polluants en sortie de ligne d'échappement pour respecter les normes actuelles se révéleront insuffisantes au vu des évolutions de normes prévues au-delà de 2017.

En effet, la première étape de la norme, Euro 6b (entrée en vigueur en septembre 2014) a conduit les constructeurs automobiles à choisir entre différentes options pour réduire plus spécifiquement les émission de NOx : - la réduction des NOx « à la source », au niveau du fonctionnement même du moteur, via des technologies de type recyclage des gaz d'échappement dans le moteur, recyclage appelé aussi technologie EGR selon l'acronyme du terme anglais correspondant à « Exhaust Gas Recirculation » haute et basse pression, par exemple ; - la réduction des NOx au niveau de la ligne d'échappement via une technologie de traitement catalytique séquentiel appelée « piège à NOx » ; - la réduction des NOx au niveau de la ligne d'échappement également, via une technologie de traitement continu appelée « réduction catalytique sélective » telle que brièvement décrite plus haut (SCR), voire en cumulant plusieurs de ces solutions.

Si ces solutions permettent de satisfaire cette première étape dans l'évolution de la norme (Euro6b), elles ne sont pas forcément capables de satisfaire la seconde étape qui s'annonce encore plus sévère (Euro 6c, entrée en vigueur prévue en septembre 2017), avec des mesures de polluants sur un nouveau cycle de roulage dit « WLTC » (pour « Worldwide Harmonized Light vehicles Test Cycle » en anglais, soit cycle de test harmonisé pour véhicules légers en français), contenant plus de phases transitoires que le cycle d'homologation actuel (dit « MVEG » pour Motor Vehicle Emissions Group en anglais, soit groupe d'émissions pour véhicules motorisés en français), mais aussi des mesures hors cycle (appelées « RDE » pour Real Driving Emission ou émissions en conditions réelles de conduite) devraient être instaurées.

Pour répondre notamment aux risques d'émissions trop élevées de NOx, différentes solutions technologiques et architectures peuvent être envisagées. Elles ont leurs avantages et leurs inconvénients. Mais la technologie de traitement des oxydes d'azote la plus efficace est la réduction catalytique sélective (SCR) car elle est efficace dans des plages de température et de débit de gaz plus étendues que celles d'un piège à NOx, l'autre solution de post-traitement.

Par ailleurs, s'ajoutent des contraintes d'implantation du dispositif de post-traitement. En effet, de façon générale, les systèmes catalytiques utilisés sont d'autant plus efficaces que la température des gaz d'échappement qui les traversent est élevée (jusqu'à un certain point). Ils s'amorceront alors d'autant plus vite après le démarrage du moteur que la température des gaz d'échappement augmente rapidement. On a donc intérêt à implanter les dispositifs de post-traitement au plus près du moteur, c'est-à-dire au plus près du collecteur des gaz d'échappement, sous capot, alors même que cet environnement est en général très encombré. On s'efforce donc généralement de concevoir des dispositifs de post-traitement aussi compacts que possible sans nuire à leurs performances.

Dans tout le présent texte, on comprend les termes « amont » et « aval » en fonction de la direction générale d'écoulement des gaz d'échappement dans la ligne d'échappement intégrant les organes de post-traitement, depuis le moteur jusqu'à la canule d'extrémité de la ligne d'échappement.

Il est, par exemple, connu de la demande de brevet WO 2011/089330 un dispositif de post-traitement regroupant dans une même enveloppe plusieurs organes qui vont être successivement traversés par les gaz d'échappement. Il y est proposé, notamment, une série d'organes comprenant d'amont en aval: - un catalyseur d'oxydation, - un injecteur d'agent réducteur de type urée, - un mélangeur dont le rôle est de mélanger intimement les gouttelettes d'urée injectées dans l'enveloppe traversée par les gaz, de façon à se décomposer en ammoniac de manière aussi homogène que possible sur toute la section droite de l'enveloppe, - un organe SCR, - un filtre à particules (appelé FAP par la suite). Il y est également proposé une alternative, consistant à remplacer l'organe SCR et le FAP, par un FAP qui est imprégné d'un catalyseur de réduction des NOx et qui remplit ainsi à la fois la fonction de filtre des suies et de réduction des NOx (appelé SCRF par la suite).

Cependant, un organe dédié SCR comme décrit dans ce document peut ne pas s'amorcer suffisamment tôt pour des raisons de thermique non favorable, notamment dans des conditions de roulage urbain pendant lesquelles les températures dans la ligne d'échappement sont assez basses. Or, c'est justement pendant ce type de roulage urbain que les évolutions de la norme européenne (notamment) vont devenir contraignantes en termes de réduction des émissions de NOx.

Il est également connu de la demande de brevet WO2012/080608 un système de post-traitement qui comprend un organe dédié SCR disposé dans l'espace sous capot, dit SCR amont, et un FAP imprégné d'un catalyseur SCR (SCRF) séparé du SCR amont, le SCR amont étant dans la zone « chaude » sous capot, tandis que le SCRF est dans la même zone « chaude » ou en « zone froide » dans une zone sous caisse du véhicule. Mais cette implantation n'est pas optimale, tout particulièrement quand il s'agit de véhicules « lourds » (avec généralement des moteurs associés de fortes cylindrées, de 1,6 ou 2,0 litres par exemple). En effet, le SCRF présente une certaine inertie thermique, et le placer « loin » de l'organe dédié SCR n'est pas favorable à son amorçage rapide pour ce type de véhicules.

Il est également connu de la demande de brevet WO2015/181456 un système de post-traitement proche du précédent, qui vient associer un organe SCR et un SCRF dans une même enveloppe. On obtient alors un système très compact, qui peut être entièrement logé dans l'espace sous capot, au plus près du moteur. Par contre, il peut devenir insuffisant, de par sa compacité même, à traiter les niveaux de NOx que l'on peut rencontrer pour des véhicules dits « lourds ».

En effet, des contraintes supplémentaires apparaissent quand le véhicule automobile est un véhicule dit « lourd » (plus de 1500 kg), qu'il soit un véhicule pour particulier ou de type utilitaire. En effet, dans les mêmes conditions de roulage qu'un véhicule moins lourd, le véhicule « lourd » aura des conditions de température plus élevées à l'échappement à gérer, et des quantités plus importantes à traiter de NOx générés dans le moteur. Pour compenser ces émissions de NOx plus élevées, les quantités d'agent réducteur à injecter dans la ligne d'échappement (par exemple de l'urée se décomposant en ammoniac) devront être plus importantes aussi, puisque ces quantités sont dictées par la stoechiométrie des réactions de NOx par l'ammoniac. Les températures plus élevées des gaz en sortie moteur favorisent par ailleurs la thermo-désorption de l'ammoniac stocké dans les organes SCR (et/ou SCRF), et peuvent en outre contribuer à la dégradation de leurs phases catalytiques actives pouvant induire une diminution de leur capacité de stockage en ammoniac. La conjugaison de températures plus élevées et d'une quantité plus importante d'urée (ou d'ammoniac) à injecter sur la ligne induit un risque accru d'émissions d'ammoniac qui n'aurait pas réagi en bout de ligne d'échappement. Or les fuites d'ammoniac en bout de ligne d'échappement sont malodorantes, et peuvent incommoder, notamment si le véhicule est dans un espace confiné de type parking fermé.

L'invention a alors pour but de concevoir un post-traitement des gaz d'échappement de moteur thermique qui remédie aux inconvénients précités. Elle a notamment pour but d'améliorer les dispositifs existants pour permettre de respecter des normes plus sévères en matière d'émissions de polluants, et plus particulièrement concernant les émissions de NOx dans des conditions de roulage non stabilisées du type roulage urbain et/ou dans une plage de températures élargies, tout en limitant au maximum d'éventuelles fuites d'agent réducteur des NOx non réagi en bout de ligne d'échappement. Avantageusement, elle a aussi pour but d'obtenir un dispositif de post-traitement plus performant pour les véhicules dits « lourds ».

L'invention a tout d'abord pour objet un véhicule automobile délimitant un espace sous capot avant équipé d'un moteur thermique et un espace sous caisse, ledit moteur étant connecté fluidiquement à une ligne d'échappement intégrant un système de post-traitement des gaz d'échappement, ledit système comportant :
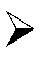 dans l'espace sous capot : un organe catalyseur d'oxydation DOC ou un organe piège à NOx (appelé aussi LNT pour « Lean NOx Trap », acronyme anglais pour piège à NOx pauvre, qui est un organe de stockage et d'élimination des NOx) ;
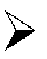 dans l'espace sous caisse : d'amont en aval une embouchure d'un moyen d'introduction de réducteur ou de précurseur d'un réducteur pour la réduction catalytique sélective des oxydes d'azote SCR ; un organe catalyseur de réduction catalytique sélective SCR des oxydes d'azote NOx; un organe filtre à particules muni d'un revêtement catalyseur de réduction catalytique sélective SCRF des oxydes d'azote NOx ; un organe de traitement des fuites d'ammoniac.

Le système de post-traitement de l'invention regroupe donc les différents organes d'une façon spécifique, en ne gardant que le catalyseur d'oxydation ou piège à NOx dans la zone sous capot, la zone « chaude », et en déportant les autres organes sous caisse. On peut alors dimensionner à ce qui est vraiment nécessaire l'organe SCR dédié et l'organe SCRF, en se libérant de la contrainte de faible espace disponible présente dans la zone sous capot : le système devient alors particulièrement adapté pour équiper des moteurs de forte cylindrée, des véhicules dits « lourds », équipés de moteurs de forte cylindrée, car permettant d'utiliser des SCR et SCRF plus volumineux, et prévoyant également le traitement des fuites d'ammoniac (les risques de fuite étant d'autant plus grandes que l'on doit injecter beaucoup d'urée sur la ligne quand on a affaire à ce type de cylindrées/véhicules). En outre, en disposant l'organe SCR de préférence juste avant l'organe SCRF, on les rend plus efficaces, car on minimise le temps d'amorçage du SCRF en milieu froid, urbain.

Et il a été également montré que cette architecture permettait de limiter au maximum les rejets/fuites d'ammoniac en bout de ligne d'échappement (ce qu'on désigne également en anglais sous le terme de « NH₃ slip », rejets d'ammoniac provenant soit de l'agent réducteur injecté en amont de l'organe porteur du catalyseur SCR mais n'ayant pas réagi, soit formés lors de la purge du LNT) ceci grâce à l'ajout d'un organe de traitement de ces fuites d'ammoniac. C'est très avantageux, tout particulièrement pour les véhicules lourds qui nécessitent l'injection d'une quantité plus importante d'agent réducteur, avec donc un risque accru de relargage d'ammoniac en bout de ligne.

Le dispositif selon l'invention va traiter les polluants gazeux et particulaires au fur et à mesure qu'ils traversent les organes de dépollution : ils pénètrent donc d'abord dans la première « brique » constituée, selon un premier mode de réalisation, du catalyseur d'oxydation, où le CO et les HC sont oxydés en eau (H₂O) et en dioxyde de carbone (CO₂). Sortent de cette première brique DOC les produits de l'oxydation du CO et des HC à savoir H₂O et CO₂, ainsi que les oxydes d'azote et les particules. Les NOx résiduels, et les particules rentrent dans la brique SCRF, qui va opérer la réduction des NOx par NH₃ et éliminer les particules en les stockant avant de les brûler lors des régénérations.

Dans l'autre mode de réalisation où le catalyseur d'oxydation DOC est remplacé par un piège à NOx, la présence, en « amont » de l'organe SCR, du piège à NOx, garantit en outre qu'une partie au moins des NOx sera traitée avant même d'entrer dans l'organe de réduction catalytique sélective SCRF. On rappelle que les pièges à NOx sont des systèmes de traitement séquentiel des NOx, avec un stockage en mélange pauvre des NOx (excès en oxygène), puis un déstockage et une réduction de NOx en mélange riche (excès de réducteurs) : - en mélange pauvre, les NOx sont stockés sous forme de nitrates sur des sites actifs (en général sous forme d'oxydes simples ou mixtes comme l'oxyde ou l'aluminate de baryum) ; - en mélange riche, les NOx sont déstockés et réduits en N₂ par les réducteurs (CO, HC et H₂), on parle alors de purge des NOx. Pour assurer cette fonction de piégeage et de réduction des NOx, la phase active du catalyseur comporte généralement des métaux nobles, du type Pt, Pd, assurant l'oxydation du NO en NO₂ et de CO/HC, en jouant ainsi le même rôle qu'un catalyseur d'oxydation classique, du rhodium permettant d'assurer la réduction des NOx en mélange riche, et d'un oxyde simple ou mixte permettant le stockage des NOx en mélange pauvre. Le fonctionnement du piège à NOx nécessite donc des basculements de richesse périodiques, le piège stockant jusqu'à saturation des NOx, pour ensuite être « purgé » périodiquement par un changement de richesse.

De préférence, l'organe catalyseur de réduction catalytique sélective SCR des oxydes d'azote NOx et l'organe filtre à particules muni d'un revêtement catalyseur de réduction catalytique sélective SCRF des oxydes d'azote NOx sont contigus. On diminue ainsi encore les déperditions thermiques de l'un à l'autre et on améliore ainsi encore le temps d'amorçage thermique du SCRF.

Avantageusement, le système de post-traitement comprend également un mélangeur disposé entre l'embouchure du moyen d'introduction du réducteur ou du précurseur de réducteur et l'organe catalyseur de réduction catalytique sélective SCR des oxydes d'azote NOx. Cet organe a pour fonction d'améliorer la dispersion des gouttes de précurseur de réducteur, par exemple d'urée en phase liquide/aqueuse, dans le flux des gaz d'échappement, afin d'en faciliter /accélérer la transformation en ammoniac de façon homogène sur tout le flux des gaz d'échappement.

L'invention s'applique également à l'injection directe du gaz réducteur, comme de l'ammoniac, qui vient alimenter la ligne d'échappement à partir d'une ou plusieurs cartouches de sel (notamment de type SrCl₂) apte à adsorber l'ammoniac et à le relarguer par activation thermique, de façon connue (technologie appelée communément SCR « solide »), et, dans ce cas-là, le mélangeur est moins nécessaire.

Selon un mode de réalisation préféré, l'embouchure du moyen d'introduction de réducteur ou de précurseur d'un réducteur pour la réduction catalytique sélective des oxydes d'azote SCR ; le mélangeur, l'organe catalyseur de réduction catalytique sélective SCR des oxydes d'azote NOx et l'organe filtre à particules muni d'un revêtement catalyseur de réduction catalytique sélective SCRF des oxydes d'azote NOx sont regroupés dans une enveloppe unique. On peut ainsi plus rapidement, plus facilement monter cette enveloppe sur la ligne, avec un seul raccordement à effectuer. En outre, on peut s'assurer ainsi que les différents organes peuvent être aussi proches que possible, pour, là encore, limiter au mieux les déperditions thermiques.

L'organe de traitement des fuites d'ammoniac, s'il est disposé en dehors de ladite enveloppe unique, peut, dans une première variante, être disposé dans une enveloppe dédiée, plus en aval sur la ligne que les autres organes donc, et de préférence en amont du ou des silencieux qui équipent généralement l'extrémité de la ligne d'échappement.

Dans une deuxième variante, il peut être intégré dans l'enveloppe d'un silencieux. Un exemple d'une telle intégration est donné dans le brevet FR3 037 101. Cette variante va dans le sens d'une plus grande compacité du système dans son ensemble, et d'un raccordement facilité à la ligne.

Avantageusement, selon une première variante, l'organe de traitement des fuites d'ammoniac est un catalyseur de traitement des fuites d'ammoniac ASC par oxydation de l'ammoniac en NOx puis la réduction desdits NOx en azote. C'est la variante préférée de l'invention (« ASC » est l'acronyme anglais du terme « Ammonia Slip Catalyst » ou catalyseur des fuites en ammoniac en français).

Selon une deuxième variante, il peut s'agir d'un catalyseur de nettoyage des fuites d'ammoniac CUC par oxydation de l'ammoniac en NOx (« CUC » est l'acronyme anglais du terme « Clean-Up Catalyst » ou catalyseur de nettoyage pour le traitement des fuites en ammoniac).

Avantageusement, l'organe catalyseur d'oxydation comprend un matériau adsorbeur d'oxydes d'azote PNA (« PNA » est l'acronyme anglais pour l'expression « Passive NOx Adsorber »).

Le rôle d'un matériau de type PNA est de pouvoir stocker lors des phases froides les oxydes d'azote émis par le moteur, tant que les organes catalysant la réduction des NOx (l'organe SCR et le filtre à particules avec revêtement catalytique SCRF) ne sont pas encore fonctionnels. En effet, il faut attendre 180 à 200°C pour pouvoir injecter le réducteur (urée) dans la ligne d'échappement et former l'ammoniac qui convertira ensuite les NOx. Avec du NH₃ « pré-stocké » dans le revêtement SCR, la conversion des NOx peut s'opérer quelques dizaines de degrés avant (aux environs de 140°C). Le PNA fonctionne en stockant les NOx « à froid » (grâce, notamment, à l'ajout, dans l'imprégnation « classique » d'un catalyseur d'oxydation, d'oxydes simples ou mixtes à caractère basique tels que, par exemple, les oxydes de cérium ou de baryum) avant de les restituer à plus haute température quand la SCR est pleinement opérationnelle (entre 200 et 300°C). Pour assurer un fonctionnement correct du PNA, on prévoit des phases de purges pour nettoyer sa surface qui s'est sulfatée au fur et à mesure du temps, de façon connue.

De préférence, dans l'espace sous caisse, le rapport entre le volume de l'organe catalyseur de réduction catalytique sélective SCR des oxydes d'azote NOₓ du système de post-traitement et celui de l' organe filtre à particules muni d'un revêtement catalyseur de réduction catalytique sélective SCRF des oxydes d'azote NOₓ est compris entre 0,25 et 0,35, et de préférence de 0,28 à 0,32, notamment de 0,30.

Ce ratio s'est avéré répartir au mieux l'effort de traitement des NOx entre les deux organes : C'est en effet l'organe SCR qui est le plus efficace, pour un volume donné, par rapport au SCRF qui, au départ, a été conçu d'abord pour filtrer de façon mécanique les particules. En proposant un organe SCR plus petit que le SCRF dans des proportions spécifiques, d'environ un tiers par rapport au SCRF, on améliore l'effet conjugué des deux organes pour traiter les NOx au plus juste, sans affecter la fonction de filtration des particules du filtre.

De préférence, dans l'espace sous capot, l'organe catalyseur d'oxydation DOC du système de post-traitement présente un volume compris entre 1,2 et 2 litres, notamment entre 1,4 et 1,8 litre, et de préférence de 1,6 litre.

De préférence, dans l'espace sous caisse, l'organe catalyseur de réduction catalytique sélective SCR des oxydes d'azote NOx du système de post-traitement présente un volume compris entre 1 et 1,4 litres, et de préférence de 1,2 litres. C'est un volume significativement plus important que celui qu'on peut envisager de loger sous capot.

De préférence, l'organe filtre à particules muni d'un revêtement catalyseur de réduction catalytique sélective SCRF des oxydes d'azote NOx du système de post-traitement présente un volume compris entre 3,5 et 4,5 litres, et de préférence de 4 litres. Tout comme pour l'organe SCR, ce filtre présente un volume également conséquent par rapport aux volumes habituellement proposés.

De préférence, dans l'espace sous caisse, l'organe de traitement des fuites d'ammoniac du système de post-traitement est un catalyseur de traitement des fuites d'ammoniac ASC par oxydation de l'ammoniac en NOx puis la réduction desdits NOx en azote, et il présente un volume compris entre 0,6 et 1 litre, de préférence 0,85 litre ou un volume compris entre 1,4 et 1,8 litre, de préférence 1,6 litre, selon les besoins.

On peut également prévoir que le système de post-traitement selon l'invention comprend au moins une sonde NOx en aval de l'organe filtre à particules muni d'un revêtement catalyseur de réduction catalytique sélective SCRF des oxydes d'azote NOx. On peut prévoir de préférence au moins deux sondes NOx dont la première en amont de l'organe catalyseur d'oxydation DOC ou de l'organe piège à NOx LNT et la deuxième entre l'organe filtre à particules muni d'un revêtement catalyseur de réduction catalytique sélective SCRF des oxydes d'azote NOx et l'organe de traitement des fuites d'ammoniac. On peut aussi prévoir optionnellement une troisième sonde NOx en aval de l'organe de traitement des fuites d'ammoniac. Cette sonde ou ces sondes sont connectées à un calculateur qui est lui-même connecté au calculateur pilotant le fonctionnement du moteur ou intégré à celui-ci et qui va pouvoir, en prenant en compte les données remontées par la ou les sondes, piloter notamment l'injection du réducteur ou du précurseur de réducteur dans la ligne d'échappement. Une ou certaines de ces sondes peuvent être remplacées par des modélisations.

L'invention a également pour objet un véhicule du type décrit plus haut qui est un véhicule utilitaire et/ou un véhicule dont le moteur thermique a une cylindrée d'au moins 1,4 litres, notamment d'au moins 1,6 ou d'au moins 2,0 litres et au plus de 3,0 litres. On a effectivement vu plus haut que le système de post-traitement de l'invention était particulièrement adapté à des moteurs puissants, nécessitant une capacité accrue de la part du système de post-traitement à traiter les HC et les NOx.

L'invention a également pour objet le procédé de mise en oeuvre du dispositif de post-traitement du véhicule décrit plus haut, où l'on opère périodiquement la régénération de l'organe filtre à particules par une montée en température des gaz d'échappement associée à l'action d'un additif contenant un catalyseur de combustion des suies ajouté dans le carburant du moteur ou déposé sur/dans les parois du filtre à particules.

A noter que les zéolithes échangées au Cuivre proposées pour le SCRF et/ou pour le catalyseur de l'organe catalyseur de réduction catalytique SCR, ce dernier pouvant également être de zéolithes échangées au fer sont par exemple à base de zéolithes de type chabazite, ferriérite ou aluminosilicates hydratés (ZMS5), et peuvent contenir également au moins un des oxydes suivants : oxyde de cérium (Ce), de zirconium (Zr), ou encore au moins un des métaux suivants : du niobium (Nb), du tungstène (W), du titane (Ti).

Le support du filtre à particules SCRF peut être, par exemple, en carbure de silicium (SiC), en cordiérite ou en titanate d'aluminium.

De préférence, le moyen d'introduction de l'agent réducteur est un injecteur du type à actionneur par solénoïde ou piézoélectrique ou mécanique ou hydropneumatique.

Le conduit entre le collecteur d'échappement et le catalyseur d'oxydation du système de post-traitement selon l'invention peut en outre comporter une ou plusieurs turbines de turbocompresseur dans le cadre d'un moteur suralimenté, et, en particulier, le dispositif selon l'invention peut être raccordé directement au carter d'un turbocompresseur, à la sortie d'une turbine.

Il est à noter, que, parmi les différentes variantes de la présente invention, la plus intéressante en termes de réduction d'émission des NOx, de gestion du NH₃, de facilité de raccordement du système de post-traitement à la ligne d'échappement s'est avérée comporter la série d'organes suivants, présentée selon une séquence d'amont vers aval :
- Sous capot : catalyseur DOC contenant un PNA dans une enveloppe, en sortie du turbocompresseur quand il est prévu
- Sous caisse : (embouchure injection de précurseur d'ammoniac/ mélangeur/ SCR/ SCRF) dans une enveloppe commune, puis (ASC + silencieux) dans une autre enveloppe ou (ASC) dans une enveloppe puis le ou les silencieux « plus loin » sur la ligne d'échappement.

L'invention est décrite plus en détail ci-après en référence à la figure relative à un mode de réalisation non limitatif se rapportant à un dispositif de post-traitement des gaz d'échappement d'un moteur diesel d'un véhicule automobile utilitaire :

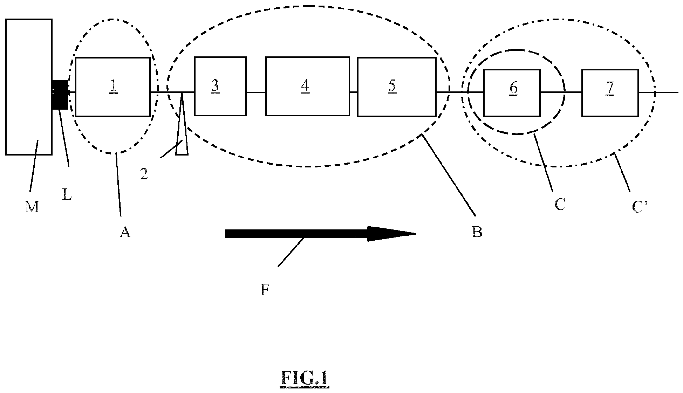

- la figure 1 représente schématiquement un moteur et sa ligne d'échappement d'un véhicule automobile comportant le système de post-traitement selon un exemple 1 de l'invention.

Les références reprises d'une figure à l'autre désignent des mêmes composants, et les différents composants représentés ne sont pas nécessairement à l'échelle. Les figures restent très schématiques pour en faciliter la lecture.

Un exemple d'architecture de post-traitement des gaz d'échappement est représenté sur la figure 1 à la façon d'un schéma-bloc. Elle est intégrée à la ligne d'échappement L, elle-même raccordée au collecteur (non représenté) des gaz d'échappement du moteur M. Cette architecture comporte selon le sens d'écoulement des gaz d'échappement (d'amont en aval donc), représenté par la flèche F, un organe 1 catalyseur d'oxydation, une embouchure d'un moyen d'introduction 2 de réducteur (ou d'un précurseur d'agent réducteur), un mélangeur 3, un organe SCR dédié 4, un filtre à particules 5 SCRF muni d'un revêtement d'imprégnation SCR et un dispositif de traitement des fuites d'ammoniac ASC 6. La ligne comporte également, après ce dispositif ASC au moins un silencieux 7. On prévoit également au moins un capteur de NOx (non représenté) entre le filtre 5 et le dispositif de traitement d'ammoniac 6 et un capteur de température (non représenté) au voisinage du catalyseur d'oxydation 1.

On commence par décrire la répartition des différents organes précités :

Dans un premier mode de réalisation, la répartition de ces différents organes le long de la ligne d'échappement L est la suivante :
- dans l'espace sous capot moteur, en sortie du moteur ou du turbocompresseur quand il en est équipé, le catalyseur d'oxydation DOC 1 est disposé dans une enveloppe dédiée A. (Au sens de la présente invention, et de façon connue, une enveloppe est à comprendre comme un contenant de section généralement cylindrique, de section supérieure à celle du reste de la ligne d'échappement et raccordé à celle-ci par des zones de raccordement sous forme de cônes tronqués)
- dans l'espace sous caisse, on loge
   ∘ les organes 2,3, 4 et 5 dans une enveloppe unique B, les organes 4 et 5 sont disposés aussi près que possible l'un de l'autre
   ∘ l'organe ASC 6 dans une enveloppe dédiée C, en amont du silencieux 7.

Le deuxième mode de réalisation se différencie du premier par le fait que l'organe ASC 6 et le silencieux 7 (ou le premier s'il en est prévu plusieurs) sont regroupés dans une même enveloppe C'. De préférence, dans ce cas, l'organe ASC est intégré à la structure interne du silencieux, comme décrit dans le brevet FR 3 037 101.

On ne rentrera pas dans le détail de la composition ou du fonctionnement des organes 1 à 6, connus en soi et décrits notamment dans les brevets cités en préambule au présent texte.

On rappelle juste brièvement que la première « brique » de cette architecture de post-traitement est un organe catalyseur d'oxydation 1, qui oxyde les espèces réductrices que sont le monoxyde de carbone (CO) et les hydrocarbures imbrûlés (HC). Il est constitué d'un support en nid d'abeille de type cordiérite sur lequel est déposée une phase active catalytique (« washcoat ») contenant des métaux précieux pour catalyser les réactions d'oxydation de CO, HC et NO. Cette phase comporte également des oxydes tels que l'alumine dopée par différents stabilisants (lanthane, cérium, zirconium, titane, silicium, etc...). Sur ces oxydes, des métaux précieux (platine, palladium) sont déposés afin de catalyser les réactions d'oxydation dès les basses températures. Des composés acides tels que des zéolithes sont aussi ajoutés. Leur aptitude au stockage des hydrocarbures à basse température et leur déstockage à haute température permet d'améliorer le traitement des HC lors des phases froides. On peut ajouter à ces fonctions (oxydation du monoxyde de carbone et des hydrocarbures imbrûlés et stockage de ces derniers à basse température) une fonction de stockage des oxydes d'azote, NOx également à basse température. Cette fonction de stockage est assurée par l'introduction de matériaux de type oxydes simples ou mixtes à caractère basique tels que par exemple, les oxydes de cérium ou de baryum entre autres.

Selon un autre mode de réalisation, le catalyseur d'oxydation 1 est remplacé par un piège à NOx. Il est constitué d'un support en nid d'abeille de type cordiérite sur lequel est déposée une phase catalytique comprenant des éléments favorisant le stockage tels que, mais pas uniquement, des oxydes simples ou mixtes de baryum et/ou de magnésium.

On ne décrit pas en détails ici l'injecteur 2 d'urée, ni le mélangeur (appelé aussi boîte de mélange), déjà décrits et connus, notamment de la demande de brevet WO 2011/089330 précitée. On rappelle juste que la boîte de mélange ou mélangeur 4est alimentée par un injecteur 3, lui-même alimenté par un module jauge-pompe qui puise de l'urée en solution aqueuse dans un réservoir d'environ 20 litres. Cette boîte de mélange assure un mélange suffisant entre les gouttes d'urée et les gaz d'échappement pour assurer la décomposition d'urée en ammoniac dans la ligne d'échappement.

L'organe dédié SCR 4 et le filtre à particules SCRF 5 traitent les oxydes d'azote NOx par réduction chimique à l'aide de l'ammoniac obtenu par décomposition de l'urée.

Le catalyseur SCR de l'organe SCR dédié 4 et du filtre à particules 5 est à base de zéolithes au cuivre, comme la chabazite, β, la cuivre-ferriérite, la ZSM5... C'est le meilleur choix, notamment pour que le catalyseur du filtre à particules reste efficace même à très haute température (qu'il résiste aux régénérations du filtre notamment). Le support poreux du filtre 5 est plutôt en carbure de silicium SiC.

La composition de l'organe ASC 6 est ainsi la suivante : la couche supérieure C1 (celle qui est en contact avec les gaz d'échappement) correspond à un revêtement catalytique de type SCR et la couche inférieure C2 (celle qui est en contact avec les parois du substrat contient des métaux précieux (de préférence du palladium en très faible quantité, entre 0,5 et 5 g/ft3, idéalement de 1 à 2) déposés sur alumine. Le fonctionnement de l'organe 8 ASC est le suivant : l'ammoniac résiduel pénètre dans la couche C1 et se stocke dans cette couche en partie. Le reste de l'ammoniac traverse cette couche C1 et pénètre dans la couche C2 dont les métaux précieux (Pd) favorisent l'oxydation de l'ammoniac NH₃ en NOx. Lorsque les NOx ressortent du revêtement catalytique SCR de la couche C2, ils repassent nécessairement par la couche C1 où est stocké le NH₃. La réaction de réduction des NOx par le NH₃ peut alors avoir lieu. Les NOx sont ainsi convertis en azote (N₂) avant de ressortir de ce catalyseur 6.

Les données dimensionnelles/géométriques pour les différents organes sont le suivantes : Les enveloppes A, B et C, C' sont de section cylindrique et permettent de loger les différents organes concernés, également de formes extérieures sensiblement cylindriques et de sections d'environ 175 cm² (ou 150 mm de diamètre). Comme indiqué précédemment, les extrémités de l'enveloppe 2 sont en forme de tronçons de cône, afin d'en permettre le raccordement au reste de la ligne d'échappement de section nettement plus petite.

La longueur du catalyseur d'oxydation DOC 1 est de 4 pouces, soit 10,16 cm, et présente un volume de 1,6 litre.

La longueur de l'organe SCR 4 est de 3 pouces, soit 7,62 cm, et présente un volume de 1,2 litre.

La longueur du filtre SCRF 5 est de 10 pouces, soit 25,4 cm, et présente un volume de 4 litres.

La longueur de l'organe ASC 6 est, soit de 2 pouces, (5,08 cm) soit de 4 pouce (10,16 cm), ce qui correspond à un volume de respectivement 0,85 et 1,6 litre.

La régénération du filtre à particules SCRF 5 se fait périodiquement, notamment dès qu'un seuil de saturation en suies est détecté (notamment par la comparaison de la pression mesurée en amont et en aval du filtre). Elle est de préférence facilitée par l'ajout, dans le carburant, d'additifs de régénération facilitant la montée en température du filtre, sachant qu'ici le filtre est déporté sous caisse, donc plus loin du moteur que dans d'autres configurations.

A noter qu'avec la répartition des organes de traitement des gaz d'échappement selon l'invention, on peut augmenter à la fois la taille de l'organe SCR et celle du filtre à particules, donc traiter de façon conforme aux normes, notamment euro 6.2 et euro 6.3, les émissions de NOx et les particules, même dans le cas de véhicules utilitaires, de moteurs de forte cylindrée, en respectant cependant de préférence un ratio de volumes entre l'organe SCR et le filtre SCRF, malgré des conditions thermiques moins favorables qu'au voisinage du moteur dans l'espace sous capot.

L'invention présente un intérêt physique à ce dimensionnement précis :
- Avoir la petite brique de l'organe SCR devant la grosse brique du filtre SCRF fait que cette petite brique monte très vite en température car elle est très légère, et donc est très vite efficace sur roulage urbain.
- Inversement le principe de conserver derrière une grosse et lourde brique SCRF fait que cette grosse brique sera très stable en température, en raison de son inertie thermique, et donc elle sera plus efficace pour traiter les NOx sur des profils de roulage très dynamiques (enchainement d'accélérations et décélérations), là où la petite brique devant se refroidit trop vite.
- Enfin l'intérêt de mettre cette ensemble SCR et SCRF sous la caisse permet de pas avoir besoin d'une boite de mélange très lourde qui perd beaucoup de température et dont l'arrosage n'est pas parfait, et de ne conserver qu'un simple mixer léger de quelques dizaine s de grammes et efficace en arrosage.

## Revendications

1. Véhicule automobile délimitant un espace sous capot avant équipé d'un moteur thermique (M) et un espace sous caisse, ledit moteur étant connecté fluidiquement à une ligne d'échappement (L) intégrant un système de post-traitement des gaz d'échappement, **caractérisé en ce que** ledit système comporte
• dans l'espace sous capot : un organe catalyseur d'oxydation DOC (1) ou un organe piège à NOx LNT
• dans l'espace sous caisse : d'amont en aval une embouchure (2) d'un moyen d'introduction de réducteur ou de précurseur d'un réducteur pour la réduction catalytique sélective des oxydes d'azote SCR ; un organe catalyseur de réduction catalytique sélective SCR des oxydes d'azote NOₓ (4) ; un organe filtre à particules (5) muni d'un revêtement catalyseur de réduction catalytique sélective SCRF des oxydes d'azote NOₓ ; un organe de traitement des fuites d'ammoniac (6).

2. Véhicule selon la revendication précédente, **caractérisé en ce que** l'organe catalyseur de réduction catalytique sélective SCR des oxydes d'azote NOₓ (4) et l'organe filtre à particules (5) muni d'un revêtement catalyseur de réduction catalytique sélective SCRF des oxydes d'azote NOₓ sont contigus.

3. Véhicule selon la revendication précédente, **caractérisé en ce que** le système de post-traitement comprend également un mélangeur (3) disposé entre l'embouchure (2) du moyen d'introduction du réducteur ou du précurseur de réducteur et l'organe catalyseur de réduction catalytique sélective SCR des oxydes d'azote NOx (4).

4. Véhicule selon la revendication précédente, **caractérisé en ce que** l'embouchure (2) du moyen d'introduction de réducteur ou de précurseur d'un réducteur pour la réduction catalytique sélective des oxydes d'azote SCR ; le mélangeur (3), l'organe catalyseur de réduction catalytique sélective SCR des oxydes d'azote NOₓ (4) et l'organe filtre à particules (5) muni d'un revêtement catalyseur de réduction catalytique sélective SCRF des oxydes d'azote NOₓ sont regroupés dans une enveloppe (B) unique.

5. Véhicule selon la revendication précédente, **caractérisé en ce que** l'organe de traitement des fuites d'ammoniac (6) est disposé en dehors de ladite enveloppe unique, soit dans une enveloppe dédiée (C), soit en étant intégrée dans l'enveloppe (C') d'un silencieux (7).

6. Véhicule selon l'une des revendications précédentes, **caractérisé en ce que** l'organe de traitement des fuites d'ammoniac (6) est un catalyseur de traitement des fuites d'ammoniac (ASC) par oxydation de l'ammoniac en NOx puis la réduction desdits NOx en azote.

7. Véhicule selon la revendication précédente, **caractérisé en ce que** le catalyseur de traitement des fuites d'ammoniac (ASC) par oxydation de l'ammoniac en NOx puis la réduction desdits NOx en azote présente un volume compris entre 0,6 et 1 litre, de préférence 0,85 litre ou un volume compris entre 1,4 et 1,8 litres, de préférence 1,6 litres.

8. Véhicule selon l'une des revendications 1 à 5, **caractérisé en ce que** l'organe de traitement des fuites d'ammoniac (6) est un catalyseur de nettoyage des fuites d'ammoniac (CUC) par oxydation de l'ammoniac en NOx.

9. Véhicule selon l'une des revendications précédentes, **caractérisé en ce que** l'organe catalyseur d'oxydation (1) comprend un matériau adsorbeur d'oxydes d'azote PNA.

10. Véhicule selon l'une des revendications précédentes, **caractérisé en ce que** dans l'espace sous caisse, le rapport entre le volume de l'organe catalyseur de réduction catalytique sélective SCR des oxydes d'azote NOₓ (4) du système de post-traitement et celui de l'organe filtre à particules (5) muni d'un revêtement catalyseur de réduction catalytique sélective SCRF des oxydes d'azote NOₓ est compris entre 0,25 et 0,35, et de préférence de 0,28 à 0,32, notamment de 0,30.

11. Véhicule selon l'une des revendications précédentes, **caractérisé en ce que** l'organe catalyseur d'oxydation DOC (1) du système de post-traitement présente un volume compris entre 1,2 et 2 litres, notamment entre 1,4 et 1,8 litre, et de préférence de 1,6 litre.

12. Véhicule selon l'une des revendications précédentes, **caractérisé en ce que**, dans l'espace sous caisse, l'organe catalyseur de réduction catalytique sélective SCR des oxydes d'azote NOₓ (4) du système de post-traitement présente un volume compris entre 1 et 1,4 litres, de préférence 1,2 litres.

13. Véhicule selon l'une des revendications précédentes, **caractérisé en ce que**, dans l'espace sous caisse, l'organe filtre à particules (5) muni d'un revêtement catalyseur de réduction catalytique sélective SCRF des oxydes d'azote NOₓ du système de post-traitement présente un volume compris entre 3,5 et 4,5 litres, de préférence 4 litres.

14. Véhicule selon l'une des revendications précédentes, **caractérisé en ce que** le moteur thermique (M) a une cylindrée d'au moins 1,4 litres, notamment d'au moins 1,6 ou d'au moins 2,0 litres et au plus de 3,0 litres.

15. Véhicule selon l'une des revendications précédentes, **caractérisé en ce que** le catalyseur SCR de l'organe catalyseur de réduction catalytique sélective SCR des oxydes d'azote NOₓ (4) est à base de zéolithes échangées au cuivre, que le catalyseur de l'organe filtre à particules (5) muni d'un revêtement catalyseur de réduction catalytique sélective SCRF des oxydes d'azote NOₓ est à base de zéolithes échangées au cuivre ou de zéolithes échangées au fer.
